(19) Europäisches Patentamt / European Patent Office / Office européen des brevets

(11) **EP 3 217 315 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(51) Int Cl.:
*G06K 7/10* *(2006.01)* *G06K 7/14* *(2006.01)*

(21) Anmeldenummer: **16158868.6**

(22) Anmeldetag: **07.03.2016**

(54) **OPTISCHER SENSOR**

OPTICAL SENSOR

CAPTEUR OPTIQUE

(84) Benannte Vertragsstaaten:
**DE**

(43) Veröffentlichungstag der Anmeldung:
**13.09.2017 Patentblatt 2017/37**

(73) Patentinhaber: **Leuze electronic GmbH + Co KG**
**73277 Owen/Teck (DE)**

(72) Erfinder:
• **Müller, Thomas**
**73119 Zell u.A. (DE)**

• **Aldiek, Norbert**
**73230 Kirchheim/Teck (DE)**
• **Sanzi Dr., Friedrich**
**73230 Kirchheim/Teck (DE)**

(74) Vertreter: **Ruckh, Rainer Gerhard**
**Patentanwalt**
**Jurastrasse 1**
**73087 Bad Boll (DE)**

(56) Entgegenhaltungen:
**EP-A1- 2 908 266**      **WO-A1-2010/114449**
**US-A1- 2013 048 731**

EP 3 217 315 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen optischen Sensor und Verfahren zur Erfassung von Codes mittels eines optischen Sensors.

Derartige optische Sensoren werden typischerweise zur Erfassung von Codes, wie z.B. von Barcodes, eingesetzt. Die optische Sensoren weisen typischerweise einen Bildsensor mit einer zugeordneten Beleuchtungseinheit auf. Befindet sich ein Code im Sichtfeld des optischen Sensors wird dieser auf dem Bildsensor des optischen Sensors abgebildet. Das Bild des Codes wird in eine Auswerteeinheit des optischen Sensors eingelesen, wo anhand dieses Bildes die Dekodierung des Codes erfolgt.

Voraussetzung für eine erfolgreiche Dekodierung des Codes ist, dass dessen Kontrastmuster hinreichend scharf auf dem Bildsensor des optischen Sensors abgebildet werden. Bei Barcodes bestehen die Kontrastmuster aus einer Folge von aneinander angrenzenden hellen und dunklen Flächenelementen, wobei die Flächenelemente durch abrupte Hell-/ Dunkelübergänge getrennt sind.

Ein Problem bei der Erfassung der Codes entsteht generell dann, wenn die Codes mit einer Geschwindigkeit relativ zum optischen Sensor bewegt werden. Durch diese Relativbewegung entsteht bei der Bildaufnahme der Codes eine Bewegungsunschärfe, die bei gleichen Aufnahmebedingungen umso größer ist, je größer die Geschwindigkeit ist. Bei einem mit einer Bewegungsunschärfe behafteten Bild des Codes auf dem Bildsensor verschwimmen und verschmieren die Kontrastmuster, das heißt die Hell-/ Dunkelübergänge in den Kontrastmustern werden nicht mehr scharf abgebildet. Damit aber können die Kontrastmuster des Codes in den mit dem Bildsensor aufgenommenen Bildern in der Auswerteeinheit nicht mehr aufgelöst, das heißt voneinander unterschieden werden, so dass eine Dekodierung der Codes nicht mehr möglich ist.

Damit aber ist die Erfassung von Codes mittels des optischen Sensors auf relativ geringe Relativgeschwindigkeiten zwischen Codes und optischen Sensors begrenzt, wodurch die Anwendungsmöglichkeiten des optischen Sensors stark eingeschränkt sind.

Dieser Einschränkung könnte prinzipiell dadurch entgegengewirkt werden, dass die Bilder der Codes von dem optischen Sensor mit sehr kurzen Belichtungszeiten aufgenommen werden. Nachteilig hierbei ist, dass dann für die optischen Sensoren Bildsensoren mit entsprechend kurzen Belichtungszeiten verwendet werden müssen. Weiterhin ist bei einem Einsatz derartiger Sensoren ein weiterer Zusatzaufwand hinsichtlich weiterer optischer Systeme erforderlich. Dieser Aufwand ist erforderlich, um die kurzen Belichtungszeiten des Bildsensors zu unterstützen. So muss eine ausreichende Lichtmenge auf den Bildsensor geführt werden, was teurere Beleuchtungskomponenten erfordert, ggf. sogar eine externe Beleuchtung notwendig macht. Dies führt zu einer unerwünschten Erhöhung der Herstellkosten des optischen Sensors.

Die WO 2010/114449 A1 betrifft ein Verfahren zur Detektion von Barcodes mittels eines Barcodelesers, welcher eine Kamera aufweist. Insbesondere aufgrund einer Delativbewegung zwischen Barcodeleser und Barcode sind die vom Barcode aufgenommenen Barcodebilder verzerrt. Zur Elimination derartiger Verzerrungen werden Filter, insbesondere Wiener-Filter eingesetzt. Dabei werden unterschiedliche Bewegungskerne des Filters vorgegeben, wobei für diese Grauwertverteilungen für das zu filternde Barcodebild erhalten werden. Dabei wird in einem Optimierungsverfahren der Bewegungskern für die Filterung des Barcodes ausgewählt, für welchen die Grauwertverteilung erhalten wird, die einer optimalen Grauwertverteilung am nächsten kommt.

Der Erfindung liegt die Aufgabe zugrunde, einen optischen Sensor und ein Verfahren bereitzustellen, mittels derer bei geringem Kostenaufwand eine sichere Erfassung von Codes in einem breiten Anwendungsbereich ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zur Erfassung eines Codes mittels eines einen Bildsensor und eine Auswerteeinheit aufweisenden optischen Sensors. Die Codes werden mit einer Relativgeschwindigkeit relativ zubewegt, umfassend folgende Verfahrensschritte:

•   Dimensionierung eines in der Auswertung vorgesehenen Filters, indem diesem eine Eingabegröße zugeführt wird, die ein Maß für den Geschwindigkeitsvektor der Geschwindigkeit der Codes relativ zu dem optischen Sensor ist, wobei eine Auswerteeinheit zugeordnete Eingabeeinheit vorgesehen ist, über welche der Geschwindigkeitsvektor als Eingabegröße eingebbar ist, oder der Geschwindigkeitsvektor als Eingabegröße in einem Einlernvorgang bestimmt wird.

•   Erfassen eines mit der Relativgeschwindigkeit zum optischen Sensor bewegten Codes mit dem Bildsensor.

•   Reduktion der ein von dem Bildsensor aufgenommenen Bild des Codes enthaltenen, durch die Relativgeschwindigkeit bedingten, Bewegungsunschärfe.

- Dekodierung des im gefilterten Bild enthaltenen Codes in der Auswerteeinheit.

Weiterhin betrifft die Erfindung einen optischen Sensor zur Durchführung dieses Verfahrens.

Der Grundgedanke der Erfindung besteht somit darin, ein mit dem Bildsensor des optischen Sensors aufgenommenes Bild mit dem erfindungsgemäßen Filter zu bearbeiten, bevor es dekodiert wird.

Das Filter ist durch Einlernen der Eingabegröße optimal an die Relativgeschwindigkeit von Code und optischen Sensoren angepasst, so dass mit diesem die geschwindigkeitsbedingte Bewegungsunschärfe des Bildes des Codes signifikant reduziert werden kann. Dies bedeutet, dass mit dem Filter geschwindigkeitsbedingte Verschmierungen der Hell-/ Dunkelübergänge des Kontrastmusters des Codes in dem Bild des Bildsensors zumindest teilweise eliminiert werden können, so dass das gefilterte Bild wieder schärfere Hell-/ Dunkelübergänge des Kontrastmusters aufweist. Aufgrund dessen kann im Gegensatz zu dem ungefilterten Bild des Bildsensors eine Dekodierung des Codes erfolgreich durchgeführt werden.

Durch die erfindungsgemäße Filterung kann somit gegenüber einem System ohne Filterung eine sichere Erfassung von Codes bei höheren Relativgeschwindigkeiten zwischen Codes und optischen Sensoren erfolgen. Damit ist der Anwendungsbereich und damit die Funktionalität des erfindungsgemäßen optischen Sensors signifikant erhöht.

Die durch die Filterung erzielte Reduzierung der Bewegungsunschärfe in den Bildern des Codes kann bei gleicher Relativgeschwindigkeit zwischen Codes und optischen Sensoren auch zur Erhöhung der maximalen Distanz der Codes zum optischen Sensor, innerhalb derer noch eine Dekodierung der Codes möglich ist, genutzt werden.

Schließlich können vorteilhaft bei dem erfindungsgemäßen optischen Sensor kostengünstige Bildsensoren, deren minimale Belichtungszeiten relativ groß sind eingesetzt werden, da aufgrund der erfindungsgemäßen Filterung auch bei großen Relativgeschwindigkeiten zwischen Codes und optischen Sensoren und bei großen Belichtungszeiten noch eine sichere Dekodierung der Codes möglich ist.

Besonders vorteilhaft wird für die erfindungsgemäße Filterung ein Wiener-Filter oder ein Zero-Forcing-Filter (Entwurf im Frequenzraum [1], Entwurf im Ortsraum [2]) eingesetzt. Alternativ oder zusätzlich können zur Reduzierung der Bewegungsunschärfe in den Bildern von Codes auch trellisbasierte Methoden wie zum Beispiel der MAP-Algorithmus [3] oder ein Viterbi-Algorithmus [4], [5] zur Reduzierung oder Kompensation der Bewegungsunschärfe in einem Bild des Codes verwendet werden.

[1] Rafael Gonzalez, Richard Woods, and Steven Eddins, "Digital Imae Processing Using Matlab", Prentice Hall, 2004

[2] Steven Kay, "Fundamentals of statistical signal processing: estimation theory", Prentice Hall, 1993

[3] Stephan ten Brink, "Designing Iterative Decoding Schemes with thte Extrinsic Information Transfer Chart", AEÜ International Journal of Electronics and Communications, Vol. 54, No. 6, November 2000

[4] John G. Proakis, "Digital Communications", McGraw-Hill, 1995

[5] Peter Adam Höhe, "Grundlagen der digitalen Informationsübertragung", Springer Vieweg, 2013

Bei dem erfindungsgemäßen Verfahren wird der Umstand ausgenutzt, dass die zu erfassenden Codes mit einer bestimmten, vorzugsweise bekannten Relativgeschwindigkeit zum optischen Sensor bewegt werden. Diese Relativgeschwindigkeit wird als Eingabegröße im Filter eingegeben, so dass der Filter optimal an die Relativgeschwindigkeit angepasst werden kann.

Gemäß einer ersten Variante ist eine der Auswerteeinheit zugeordnete Eingabeeinheit vorgesehen, über welcher der Geschwindigkeitsvektor als Eingabegröße eingebbar ist.

Wesentlich hierbei ist, dass nicht nur der Betrag, sondern auch die Richtung der Relativgeschwindigkeit als Eingabegröße eingegeben wird.

Gemäß einer zweiten Variante wird der Geschwindigkeitsvektor in einem Einlernvorgang bestimmt.

Der Einlernvorgang kann beispielsweise derart erfolgen, dass mit dem optischen Sensor ein mit der Relativgeschwindigkeit bewegtes Testobjekt mit- und ortsaufgelöst erfasst wird.

Gemäß einer dritten Variante wird zur Bestimmung des Geschwindigkeitsvektors als Eingabegröße ein Referenzcode mit dem Geschwindigkeitsvektor relativ zum optischen Sensor bewegt. Dabei wird das mit dem Bildsensor erhaltene verzerrte Bild des Referenzcodes mit dem in der Auswerteeinheit gespeicherten unverzerrten Bild oder Merkmalen hiervon verglichen.

Anhand der Relativgeschwindigkeit als Eingabegröße kann dann eine Dimensionierung des Filters bestimmen, wobei die Dimensionierung durch eine Festlegung von Koeffizienten des Filters oder sonstigen Parametern erfolgt.

Gemäß einer konstruktiv vorteilhaften Ausgestaltung der Erfindung weist der Bildensor eine matrixförmige Anordnung von lichtempfindlichen Elementen auf.

Insbesondere ist der Bildsensor von einem CCD- oder CMOS-Array gebildet.

Weiterhin weist der optische Sensor eine Beleuchtungseinheit auf.

Vorteilhaft weist die Beleuchtungseinheit eine oder mehrere Leuchtdioden oder Laserdioden auf.

Mit dem erfindungsgemäßen optischen Sensor können Codes unterschiedlichster Ausprägung erfasst werden. Prinzipiell können die Codes sogar von alphanumerischen Zeichen gebildet sein.

Insbesondere weisen die Codes Kontrastmuster mit definierten Hell-/ Dunkelübergängen auf. Insbesondere sind die Codes von 1D- oder 2D-Codes gebildet.

Die Erfindung wird im Folgenden anhand der Zeichnungen erläutert. Es zeigen:

Figur 1: Schematische Darstellung eines Ausführungsbeispiels des erfindungsgemäßen optischen Sensors.

Figur 2a: Originalbild eines Beispiels eines Codes.

Figur 2b: Geschwindigkeitsverzerrtes Bild des Codes gemäß Figur 2a.

Figur 3: Schematische Darstellung der Geschwindigkeitsvermessung eines Bildes eines Codes und dessen Filterung und anschließender Dekodierung.

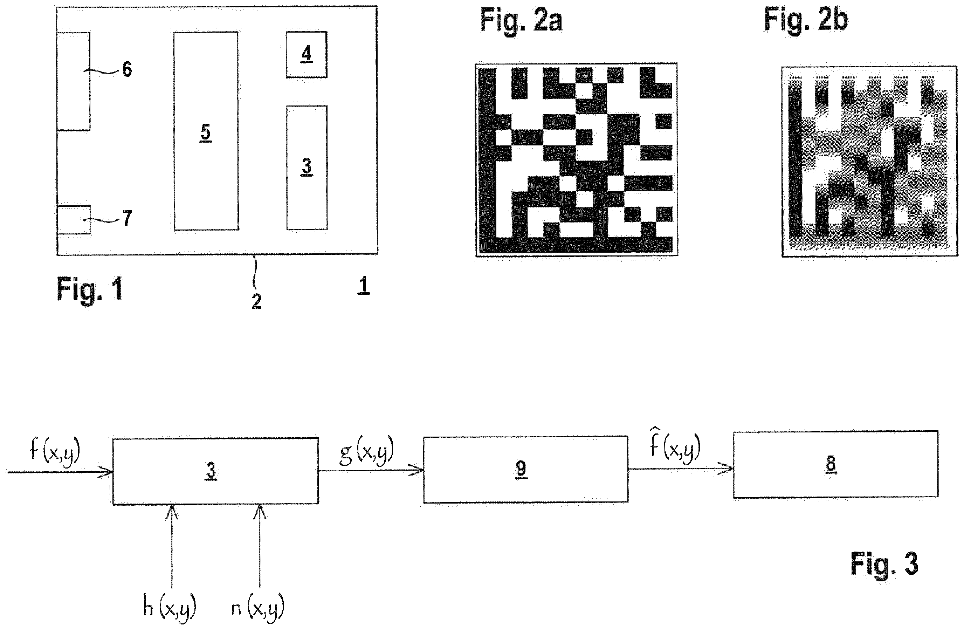

Figur 1 zeigt eine schematisch den Aufbau eines Ausführungsbeispiels des erfindungsgemäßen optischen Sensors 1. Die Komponenten des optischen Sensors 1 sind in einem Gehäuse 2 integriert. Der optische Sensor 1 umfasst als Sensorkomponenten einen Bildsensor 3 und eine diesem zugeordnete Beleuchtungseinheit 4. Der Bildsensor 3 weist eine matrixförmige Anordnung von lichtempfindlichen Elementen auf. Vorteilhaft ist der Bildsensor 3 von einem CCD- oder CMOS-Array gebildet. Die Beleuchtungseinheit 4 umfasst eine oder mehrere Leuchtdioden oder Laserdioden.

Weiterhin umfasst der optische Sensor 1 eine Auswerteeinheit 5, die von einem Mikroprozessor oder dergleichen gebildet ist. Mit der Auswerteeinheit 5 wird die Beleuchtungseinheit 4 gesteuert. Zudem erfolgt in der Auswerteeinheit 5 die Auswertung der im Bildsensor 3 generierten Bildsignale, die von den Signalen der einzelnen lichtempfindlichen Elemente gebildet sind.

Weiterhin umfasst der optische Sensor 1 eine Eingabeeinheit 6, die in Form eines Tastenfelds, eines Touchscreen oder dergleichen ausgebildet ist und an die Auswerteeinheit 5 angeschlossen ist. Weiterhin ist ein Ausgang 7 zur Datenausgabe an die Auswerteeinheit 5 angeschlossen. Anstelle eines einzelnen Ausgangs 7 kann auch eine komplexere Ausgangsschaltung mit mehreren Ausgängen 7 oder einer geeigneten Schnittstelle vorgesehen sein.

Der erfindungsgemäße optische Sensor 1 dient zur Erfassung von Codes. Die Codes können unterschiedlich ausgebildete Kontrastmuster aufweisen. Insbesondere können die Codes als 1D- oder 2D-Codes ausgebildet sein.

Figur 2a zeigt ein Originalbild eines solchen 2D-Codes. Der 2D-Code weist eine Anordnung von schwarzen und weißen Flächenelementen auf, die durch scharfe Hell-/ Dunkelübergänge getrennt sind.

Zur Erfassung eines solchen 2D-Barcodes wird dieser mit dem Bildsensor 3 erfasst, wobei dieses Bild dann in der Auswerteeinheit 5 zur Dekodierung des 2D-Barcodes ausgewertet wird. Ein solches Bild des 2D-Codes auf dem Bildsensor 3 ergibt sich, wenn der 2D-Code stationär, vor dem optischen Sensor 1 in einer geeigneten Lesedistanz angeordnet ist. Die Dekodierung des 2D-Codes anhand des in Figur 2a dargestellten Originalbilds ist ohne Schwierigkeiten möglich, da die schwarzen und weißen Flächenelemente des 2D-Codes unverzerrt wiedergegeben sind. Somit können die durch die Hell-/ Dunkelübergänge klar abgegrenzten Flächenelemente in ihren Anordnung und Größen exakt erkannt werden, so dass eine sichere Dekodierung des 2D-Codes möglich ist.

Erfindungsgemäß werden mit den optischen Sensoren 1 Codes erfasst, die mit einer konstanten Relativgeschwindigkeit zum optischen Sensor 1 bewegt werden. Durch diese Bewegung der Codes enthalten die mit Bildsensor 3 des optischen Sensors 1 aufgenommenen Bilder der Codes eine Bewegungsunschärfe. Eine solche Abbildung zeigt die Figur 2b des 2D-Codes gemäß Figur 2a, das im Bildsensor 3 dann erhalten wird, wenn der 2D-Code mit einer bestimmten Relativgeschwindigkeit am optischen Sensor 1 vorbeibewegt wird. Durch die Bewegung wird eine Bewegungsunschärfe im Bild des 2D-Codes derart erhalten, dass die Hell-/ Dunkelübergänge der Flächenelemente verschmiert sind und anstelle schwarzer und weißer Flächenelemente auch Grau-Zonen mit unterschiedlichen Graustufen enthalten werden. Aufgrund dieser Bewegungsunschärfe kann der 2D-Code nicht mehr dekodiert werden.

Um eine sichere Dekodierung von Codes auch dann zu ermöglichen, wenn diese mit einer konstanten Geschwindigkeit relativ zum optischen Sensor 1 bewegt werden, ist in der Auswerteeinheit 5 zusätzlich zu einem Dekodierer 8 ein Filter 9 vorgesehen, das im vorliegenden Fall von einem Wiener-Filter gebildet ist. Das Filter 9 und der Dekodierer 8 sind in der Auswerteeinheit 5 implementierten Software-Modulen gebildet. Die damit durchgeführten Auswerteschritte sind in Figur 3 dargestellt.

Wie aus Figur 3 ersichtlich erfolgt mit dem Bildsensor 3 die Bildaufnahme eines Codes, im vorliegenden Fall eines 2D-Codes. In Figur 3 ist dabei das Originalbild, der die ungestörte räumliche Struktur des 2D-Codes mit $f(x, y)$ bezeichnet, wobei $x, y$ Ortskoordinaten sind, das heißt mit $x$ und $y$ sind die Raumrichtungen der lichtempfindlichen Elemente des Bildsensors 3 bezeichnet.

Mit dem Bildsensor 3 wird jedoch nicht allein das Originalbild des 2D-Codes aufgenommen, vielmehr sind dem Bild Störgrößen überlagert, in Figur 3 mit h(x, y), n(x, y) bezeichnet. Die Funktion h(x, y) ist die Verzerrungsfunktion die die Bewegungsunschärfe des Bildes angibt, das heißt h(x, y) beschreibt die Verzerrung des Originalbilds infolge der Relativgeschwindigkeit des 2D-Codes relativ zum optischen Sensor 1. Mit n(x, y) ist eine Funktion beschrieben, in der das ortsabhängige Rauschen des Bildes enthalten ist.

Durch die Überlagerung des Originalbildes f(x, y) mit der Verzerrungsfunktion h(x, y) und der das Rauschen enthaltenen Funktion n(x, y) ergibt sich das am Bildsensor 3 empfangene Bild g(x, y), das dem Filter 9 der Auswerteeinheit 5 zugeführt wird.

Die Funktion g(x, y) bestimmt sich gemäß folgender Beziehung.

$$g(x, y) = h(x, y) * f(x, y) + n(x, y)$$

Dabei ist mit * eine Faltung im Ortsraum bezeichnet, das heißt in ausgeschriebener Form lautet die vorstehende Formel:

$$g(x, y) = \int\int h(\chi - \chi', y - y')\, f(\chi', y')\, d\chi'\, dy' + n(x, y)$$

Durch eine Fouriertransformation ergibt sich daraus die folgende Beziehung im Frequenzraum u, v

$$G(u, v) = H(u, V)\, F(u, v) + N(u, v)$$

Dabei ist G(u, v) die Fouriertransformierte von g(x, y),

H(u, v) die Fouriertransformierte von h(x, y),

F(u, v) die Fouriertransformierte von f(x, y) und

N(u, v) die Fouriertransformierte von n(x, y).

Um die durch die Relativgeschwindigkeit zwischen 2D-Barcode und optischem Sensor 1 bedingte Bewegungsunschärfe zu reduzieren, ist das Filter 9, insbesondere dessen Koeffizienten, an diese Relativgeschwindigkeit angepasst.

Zur Bestimmung der Koeffizienten des Filters 9 wird hierzu dem Filter 9 der Geschwindigkeitsvektor der Relativgeschwindigkeit zwischen Code und optischen Sensor 1 als Eingabegröße zugeführt. Im vorliegenden Fall wird der Geschwindigkeitsvektor über die Eingabeeinheit 6 von einem Benutzer eingegeben.

Alternativ kann der Geschwindigkeitsvektor in einem Einlernvorgang bestimmt werden.

Gemäß einer weiteren Alternative wird zur Bestimmung des Geschwindigkeitsvektors als Eingabegröße ein Referenzcode mit dem Geschwindigkeitsvektor relativ zum optischen Sensor 1 bewegt. Dabei wird mit dem Bildsensor 3 erhaltene verzerrte Bild des Referenzcodes mit dem in der Auswerteeinheit 5 gespeicherten unverzerrten Bild oder Merkmalen hiervon verglichen.

Anhand dieser Eingabegröße wird das Entzerrungsfilter W(u, v) im Frequenzbereich bezeichnet, mit dem das vom Bildsensor 3 eingelesene Bild bearbeitet wird gemäß der folgenden Beziehung

$$\hat{F}(u, v) = W(u, v)\, G(u, v)$$

Dabei stellt $\hat{F}(u, v)$ das durch die Filterung erhaltene, das heißt durch Multiplikation des Entzerrungsfilters W(u, v) mit der Fouriertransformation G(u, v) des verzerrten Bildes gewonnene gefilterte, das heißt entzerrte Bild des 2D-Barcodes im Frequenzraum dar. Durch eine Rück-Fouriertransformation kann dann aus $\hat{F}(u, v)$ das gefilterte, entzerrte Bild $\hat{f}(x, y)$ im Ortsraum erhalten werden.

Das Wiener-Entzerrungsfilter W(u, v) ist dabei gemäß der folgenden Beziehung definiert:

$$W(u,v) = \frac{H*(u,v)}{|H(u,v)|^2 + K(u,v)}$$

Dabei ist H*(u, v) die konjugiert komplexe Funktion zu H(u, v).

Die Funktion K (n, v) ist definiert durch folgende Beziehung:

$$K(u,v) = S_\eta((u,v) \backslash S_f(u,v)$$

Dabei ist $S_f(u, v)$ das Leistungsdichtespektrum von f(x, y)

Weiterhin ist $S_\jmath(u, v)$ das Leistungsdichtespektrum von $\jmath(x, y)$

Falls $S_\jmath(u, v)$ oder $S_n(u, v)$ nicht exakt bekannt ist, wird für K(u, v) eine Annahme getroffen. Die einfachste Annahme ist, dass K(u, v) eine Konstante ist, das heißt unabhängig von den Frequenzen u und v. Falls man K(u, v) = 0 verwendet, liegt die Zero-Forcing-Entzerrung vor. Da in H(u, v) die Verzerrung aufgrund der Relativgeschwindigkeit enthalten ist, wird durch die H(u, v) in der Berechnung von W(u, v) die Relativgeschwindigkeit berücksichtigt.

Die Entzerrung kann auch direkt im Ortsraum erfolgen. Dazu können die Filterkoeffizienten w(x, y) durch Rück-Fouriertransformation von W(u, v) bestimmt werden. Das gefilterte, entzerrte Bild $\hat{f}(x, y)$ im Ortsraum berechnet sich in diesem Fall zu

$$\hat{f}(x, y) = w(x, y) * g(x, y)$$

Die Wiener-Filterkoeffizienten w(x, y) können auch direkt im Ortsbereich berechnet werden [2], um die Fouriertransformationen nicht zu benötigen.

Das Leistungsdichtespektrum beschreibt die ortsabhängige Leistungsverteilung bezogen auf die Koordinatenintervalls dx, dy bzw. die ortsfrequenzabhängige Leistungsverteilung bezogen auf die Ortsfrequenzintervalle du, dv.

Das so gefilterte und entzerrte Bild $\hat{f}(x, y)$ des 2D-Codes wird dem Dekodierer 8 zugeführt. Da im entzerrten Bild die Bewegungsunschärfe zumindest reduziert wurde, sind die Flächenelemente des 2D-Codes nunmehr erkennbar, so dass im Dekodierer 8 der 2D-Barcode dekodiert werden kann und ein entsprechendes Ausgangssignal am Ausgang 7 ausgegeben werden kann.

Bezugszeichenliste

(1) Optischer Sensor
(2) Gehäuse
(3) Bildsensor
(4) Beleuchtungseinheit
(5) Auswerteeinheit
(6) Eingabeeinheit
(7) Ausgang
(8) Dekodierer
(9) Filter

**Patentansprüche**

1. Optischer Sensor (1) mit einem Bildsensor (3) zur Erfassung von Codes und mit einer Auswerteeinheit (5), welcher von dem Bildsensor (3) generierte, Codes enthaltende Bilder zugeführt sind, wobei in der Auswerteeinheit (5) die Bilder zur Dekodierung der Codes ausgewertet werden, wobei die Auswerteeinheit (5) ein Filter (9) aufweist, in welchem eine durch eine Relativgeschwindigkeit der Codes zum optischen Sensor (1) bedingte, in den Bildern der Codes enthaltene Bewegungsunschärfe reduziert wird, **dadurch gekennzeichnet, dass** dem Filter (9) eine Eingangsgröße zugeführt ist, die ein Maß für den Geschwindigkeitsvektor der Relativbewegung des Codes zum dem optischen Sensor (1) ist, und wobei anhand dieser Eingangsgröße eine Dimensionierung des Filters (9) erfolgt, wobei eine der Auswerteeinheit (5) zugeordnete Eingabeeinheit (6) vorgesehen ist, über welcher der Geschwindigkeitsvektor als Eingabegröße eingebbar ist oder der Geschwindigkeitsvektor als Eingabegröße in einem Einlernvorgang bestimmt wird.

2. Optischer Sensor (1) nach Anspruch 1, **dadurch gekennzeichnet, dass** das Filter (9) ein Wiener-Filter oder ein Zero-Forcing-Filter ist.

3. Optischer Sensor (1) nach einem der Ansprüche 1 oder 2, **dadurch gekennzeichnet, dass** zur Bestimmung des Geschwindigkeitsvektors als Eingabegröße ein Referenzcode mit dem Geschwindigkeitsvektor relativ zum optischen Sensor (1) bewegt wird und das dabei mit dem Bildsensor (3) erhaltene verzerrte Bild des Referenzcodes mit dem in der Auswerteeinheit (5) gespeicherten unverzerrten Bild oder Merkmalen hiervon verglichen wird.

4. Optischer Sensor (1) nach einem der Ansprüche 1 bis 3, **dadurch gekennzeichnet, dass** der Bildensor eine matrixförmige Anordnung von lichtempfindlichen Elementen aufweist.

5. Optischer Sensor (1) nach Anspruch 4, **dadurch gekennzeichnet, dass** der Bildsensor (3) von einem CCD- oder CMOS-Array gebildet ist.

6. Optischer Sensor (1) nach einem der Ansprüche 1 bis 5, **dadurch gekennzeichnet, dass** dieser eine Beleuchtungseinheit (4) aufweist.

7. Optischer Sensor (1) nach Anspruch 6, **dadurch gekennzeichnet, dass** die Beleuchtungseinheit (4) eine oder mehrere Leuchtdioden oder Laserdioden aufweist.

8. Optischer Sensor (1) nach einem der Ansprüche 1 bis 7, **dadurch gekennzeichnet, dass** die Codes von 1D- oder 2D-Codes gebildet sind.

9. Verfahren zur Erfassung von Codes mittels eines einen Bildsensor (3) und eine Auswerteeinheit (5) aufweisenden optischen Sensor (1), wobei die Codes mit einer Relativgeschwindigkeit relativ zubewegt werden, umfassend folgende Verfahrensschritte:

   • Dimensionierung eines in der Auswertung vorgesehenen Filters (9), indem diesem eine Eingabegröße zugeführt wird, die ein Maß für den Geschwindigkeitsvektor der Geschwindigkeit der Codes relativ zu dem optischen Sensor (1) ist, wobei eine der Auswerteeinheit (5) zugeordnete Eingabeeinheit (6) vorgesehen ist, über welcher der Geschwindigkeitsvektor als Eingabegröße eingebbar ist oder der Geschwindigkeitsvektor als Eingabegröße in einem Einlernvorgang bestimmt wird,
   • Erfassen eines mit der Relativgeschwindigkeit zum optischen Sensor (1) bewegten Codes mit dem Bildsensor (3).
   • Reduktion der ein von dem Bildsensor (3) aufgenommenen Bild des Codes enthaltenen, durch die Relativgeschwindigkeit bedingten Bewegungsunschärfe.
   • Dekodierung des im gefilterten Bild enthaltenen Codes in der Auswerteeinheit (5).

**Claims**

1. An optical sensor (1) with an picture sensor (3) for detecting codes and an evaluation unit (5), to which pictures containing codes, generated by the picture sensor (3) are conveyed, whereas the pictures for decoding the codes are interpreted in the evaluation unit (5) whereas the evaluation unit (5) have a filter (9), in which a motion blur due to a relative speed of the codes to the optical sensor (1) conditional, contained in the pictures of the codes, is reduced, **characterised in that** the filter (9) is supplied an input variable, which is a measure of the velocity vector of the relative movement of the code to the optical sensor (1), and wherein the filter (9) is sized on the basis of this input quantity, wherein one of the input unit (6) associated to the evaluation unit (5) is provided, via which the velocity vector can be entered as the input variable or the velocity vector is determined as the input variable in a teach-in process.

2. An optical sensor (1) according to claim 1, **characterised in that** the filter (9) is a Wiener filter or a zero-forcing filter.

3. An optical sensor (1) according to one of claims 1 or 2, **characterised in that** for determining the velocity vector as an input variable, a reference code with the velocity vector is moved relative to the optical sensor (1) and the distorted picture of the picture of the reference code is compared with the undistorted picture (or characteristics thereof) stored in the evaluation unit (5).

4. An optical sensor (1) according to one of claims 1 to 3, **characterised in that** the picture sensor comprises a matrix-shaped arrangement of photosensitive elements.

5. An optical sensor (1) according to claim 4, **characterised in that** the picture sensor (3) is formed by a CCD or CMOS array.

6. An optical sensor (1) according to one of claims 1 to 5, **characterised in that** it comprises a lighting unit (4).

7. An optical sensor (1) according to claim 6, **characterised in that** the illumination unit (4) comprises one or more light-emitting diodes or laser diodes.

8. An optical sensor (1) according to one of claims 1 to 7, **characterised in that** the codes are formed by 1D or 2D codes.

9. A method for detecting codes by means of an optical sensor (1) having an picture sensor (3) and an evaluation unit (5), wherein the codes are relatively moved at a relative speed, comprising the following steps:

• sizing a filter (9) provided in the evaluation by supplying to it an input variable which is a measure of the velocity vector of the velocity of the codes relative to the optical sensor (1), wherein one of the input unit (6) associated to the evaluation unit (5) is provided, via which the velocity vector can be entered as the input variable or the velocity vector is determined as the input variable in a teach-in process.
• detecting a code moved with the picture sensor (3), with the relative speed to the optical sensor (1).
• reducing the motion blur, caused by the relative speed, contained by the picture of the code recorded by the picture sensor (3).
• decoding of the code in the evaluation unit (5), contained in the filtered picture.

## Revendications

1. Capteur optique (1) comportant un capteur d'image (3) pour détecter des codes et une unité d'évaluation (5) à laquelle des images contenant des codes générées par le capteur d'image (3) sont fournies, les images étant évaluées dans l'unité d'évaluation (5) pour décoder les codes, l'unité d'évaluation (5) présentant un filtre (9) dans lequel un flou de mouvement causé par une vitesse relative des codes par rapport au capteur optique (1) et contenu dans les images des codes est réduit, **caractérisé en ce qu'**une grandeur d'entrée, qui est une mesure du vecteur vitesse du mouvement relatif du code par rapport au capteur optique (1), est fournie au filtre (9), le filtre (9) étant dimensionné sur la base de cette grandeur d'entrée, une unité d'entrée (6) associée à l'unité d'évaluation (5) étant prévue, par laquelle le vecteur vitesse peut être entré comme grandeur d'entrée ou le vecteur vitesse est déterminé comme grandeur d'entrée dans un processus d'apprentissage.

2. Capteur optique (1) selon la revendication 1, **caractérisé en ce que** le filtre (9) est un filtre de Wiener ou un filtre à forçage à zéro.

3. Capteur optique (1) selon l'une des revendications 1 ou 2, **caractérisé en ce que**, pour déterminer le vecteur vitesse comme grandeur d'entrée, un code de référence est déplacé avec le vecteur vitesse par rapport au capteur optique (1) et l'image déformée du code de référence ainsi obtenue avec le capteur d'image (3) est comparée avec l'image non déformée ou des caractéristiques de celle-ci stockées dans l'unité d'évaluation (5).

4. Capteur optique (1) selon l'une des revendications 1 à 3, **caractérisé en ce que** le capteur d'image présente un agencement matriciel d'éléments photosensibles.

5. Capteur optique (1) selon la revendication 4, **caractérisé en ce que** le capteur d'image (3) est formé par un réseau CCD ou CMOS.

6. Capteur optique (1) selon l'une des revendications 1 à 5, **caractérisé en ce qu'**il présente une unité d'éclairage (4).

**7.** Capteur optique (1) selon la revendication 6, **caractérisé en ce que** l'unité d'éclairage (4) présente une ou plusieurs diodes électroluminescentes ou diodes laser.

**8.** Capteur optique (1) selon l'une des revendications 1 à 7, **caractérisé en ce que** les codes sont formés par des codes 1D ou 2D.

**9.** Procédé de détection de codes au moyen d'un capteur optique (1) présentant un capteur d'image (3) et une unité d'évaluation (5), les codes étant déplacés relativement à une vitesse relative, comprenant les étapes de procédé suivantes :

- dimensionnement d'un filtre (9) prévu dans l'évaluation en lui fournissant une grandeur d'entrée qui est une mesure du vecteur vitesse de la vitesse des codes par rapport au capteur optique (1), une unité d'entrée (6) étant prévue, qui est associée à l'unité d'évaluation (5) et par laquelle le vecteur vitesse peut être entré comme grandeur d'entrée ou le vecteur vitesse est déterminé comme grandeur d'entrée dans un processus d'apprentissage,
- détection d'un code déplacé à la vitesse relative par rapport au capteur optique (1) avec le capteur d'image (3),
- réduction du flou de mouvement causé par la vitesse relative d'une image du code capturée par le capteur d'image (3),
- décodage du code contenu dans l'image filtrée dans l'unité d'évaluation (5).

**Fig. 1**

2

1

**Fig. 2a**

**Fig. 2b**

EP 3 217 315 B1

$f(x,y)$ → | **3** | → $g(x,y)$ → | **9** | → $\hat{f}(x,y)$ → | **8** |

$h(x,y)$   $n(x,y)$

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010114449 A1

**In der Beschreibung aufgeführte Nicht-Patentliteratur**

- **RAFAEL GONZALEZ ; RICHARD WOODS ; STEVEN EDDINS.** Digital Imae Processing Using Matlab. Prentice Hall, 2004
- **STEVEN KAY.** Fundamentals of statistical signal processing: estimation theory. Prentice Hall, 1993
- **STEPHAN TEN BRINK.** Designing Iterative Decoding Schemes with thte Extrinsic Information Transfer Chart. *AEÜ International Journal of Electronics and Communications,* November 2000, vol. 54 (6
- **JOHN G. PROAKIS.** Digital Communications. McGraw-Hill, 1995
- **PETER ADAM HÖHE.** Grundlagen der digitalen Informationsübertragung. Springer Vieweg, 2013